# FASCICULE DE BREVET EUROPEEN

(11) **EP 0 983 426 B1**
(45) Date de publication et mention de la délivrance du brevet: **10.07.2002**
(21) Numéro de dépôt: 98925750.6
(22) Date de dépôt: 20.05.1998
(51) Int. Cl.: F02B 19/12

(54) **MOTEUR A COMBUSTION INTERNE A ALLUMAGE COMMANDE**
BRENNKRAFTMASCHINE MIT FREMDZÜNDUNG
INTERNAL COMBUSTION ENGINE WITH CONTROLLED IGNITION

(30) Priorité: 23.05.1997 FR 9706294
(43) Date de publication de la demande: 08.03.2000
(73) Titulaire: RENAULT, 92109 Boulogne-Billancourt (FR)
(72) Inventeur: CUVILLIER, Paul, F-27200 Vernon (FR); HAUET, Bertrand, F-78640 Saint Germain de la Grange (FR); LUCAS, Jean-Christophe, F-95000 Cergy (FR)
(74) Mandataire: Fernandez, Francis Lionel
(86) Numéro de dépôt international: FR9801003
(87) Numéro de publication internationale: WO9853190

(56) Documents cités:
- EP-A- 0 661 432
- DE-A- 19 546 945
- FR-A- 2 389 765
- GB-A- 2 268 973
- PATENT ABSTRACTS OF JAPAN vol. 016, no. 119 (M-1225), 25 mars 1992 & JP 03 286124 A (MAZDA MOTOR CORP), 17 décembre 1991 cité dans la demande

## Description

La présente invention concerne un moteur à combustion interne à allumage commandé et injection directe de carburant destiné notamment à équiper un véhicule automobile. L'invention concerne plus particulièrement la forme de la chambre de combustion d'un tel moteur.

Il est connu par le document JP3-286124 relatif à un moteur à allumage commandé et injection directe, de disposer un injecteur de carburant sensiblement dans l'axe du cylindre et débouchant au sommet d'un évidement conique ménagé dans la culasse au-dessus d'un piston monté coulissant dans un alésage cylindrique du carter moteur. Cette position centrale de l'injecteur a pour avantage de limiter les phénomènes de mouillage de paroi qu'engendre un positionnement excentré de l'injecteur, c'est-à-dire le dépôt de particules de carburant sur les parois du cylindre où l'onde d'inflammation les atteint difficilement ce qui fait que leur combustion s'effectue incomplètement et provoque des émissions importantes de substances polluantes tels que des HC.

Conformément au document précité, il est également connu de faire déboucher au moins une bougie dans l'évidement conique, l'axe de cette bougie d'allumage étant incliné par rapport à l'axe de l'injecteur. Selon cet art antérieur, les électrodes de la bougie sont positionnées sensiblement en retrait par rapport au jet de carburant. Cette disposition s'avère toutefois peu favorable dans certaines conditions de fonctionnement du moteur en réduisant la vitesse initiale de propagation de la combustion par effet de paroi.

La présente invention a donc pour objet de réaliser un moteur à combustion interne à allumage commandé et injection directe de carburant de conception nouvelle qui remédie aux inconvénients précités.

Le moteur à combustion interne selon l'invention, est donc du type comprenant :
- une chambre de combustion délimitée par la paroi supérieure d'un piston monté dans un alésage cylindrique d'un bloc-cylindres et la paroi inférieure d'une culasse en forme de toit dont l'arête s'étend parallèlement à l'axe longitudinal du moteur ;
- deux conduits d'admission formés à travers la culasse et débouchant dans la chambre de combustion d'un côté de la surface en toit par deux orifices distincts d'admission obturés par des soupapes ;
- deux conduit d'échappement formés à travers la culasse et débouchant dans la chambre de combustion (1;201) du côté opposé aux orifices d'admission par deux orifices distincts d'échappement obturés par des soupapes ;
- un évidement ménagé dans la culasse et débouchant dans la paroi inférieure de la culasse en forme de toit ;
- un injecteur de carburant disposé parallèlement à l'axe du cylindre et débouchant au sommet de l'évidement ;
- une bougie d'allumage débouchant dans l'évidement.

Selon l'invention, le moteur à combustion interne est caractérisé en ce que l'évidement est formé par une cavité principale délimitée par un fond où débouche le nez de l'injecteur et une paroi latérale, et une pluralité de cavités secondaires débouchant dans la partie inférieure de la cavité principale.

Selon une autre caractéristique du moteur à combustion interne objet de l'invention, la cavité principale s'étend dans l'axe du cylindre.

Selon une autre caractéristique du moteur à combustion interne objet de l'invention, la cavité principale est de section sensiblement circulaire.

Selon une autre caractéristique du moteur à combustion interne objet de l'invention, la première cavité principale est de section sensiblement elliptique.

Selon une autre caractéristique du moteur à combustion interne objet de l'invention, le piston est pourvu sur sa paroi supérieure d'une cavité s'étendant sensiblement sous l'évidement.

Selon une autre caractéristique du moteur à combustion interne objet de l'invention, les cavités secondaires s'étendent de part et d'autre de la cavité principale parallèlement à l'arête et entre les orifices d'admission et/ou d'échappement.

Selon une autre caractéristique du moteur à combustion interne objet de l'invention, la bougie débouche à travers la paroi latérale dans la partie supérieure de la cavité principale.

Selon une autre caractéristique du moteur à combustion interne objet de l'invention, les électrodes de la bougie s'étendent au voisinage de l'axe du cylindre.

Selon une autre caractéristique du moteur à combustion interne objet de l'invention, la bougie est disposée au-dessus des conduits d'admission avec une inclinaison adaptée par rapport à l'axe du cylindre.

Selon une autre caractéristique du moteur à combustion interne objet de l'invention, la bougie est disposée au-dessus des conduits d'échappement avec une inclinaison adaptée par rapport à l'axe du cylindre.

On comprendra mieux les buts, aspects et avantages de la présente invention, d'après la description donnée ci-après de deux modes de réalisation de l'invention, présentés à titre d'exemples non limitatifs, en se référant aux dessins annexés, dans lesquels :
la figure 1 est une vue de dessus schématique, illustrant un premier mode de réalisation d'un moteur à combustion interne selon l'invention ;
la figure 2 est une vue en coupe selon respectivement la ligne II-II de la figure 1.

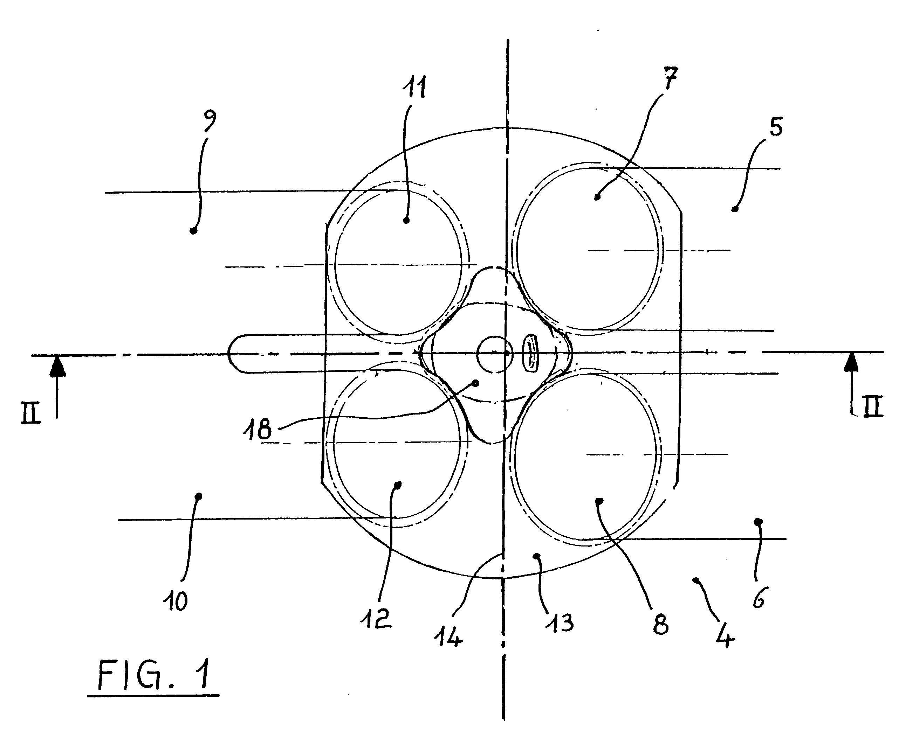

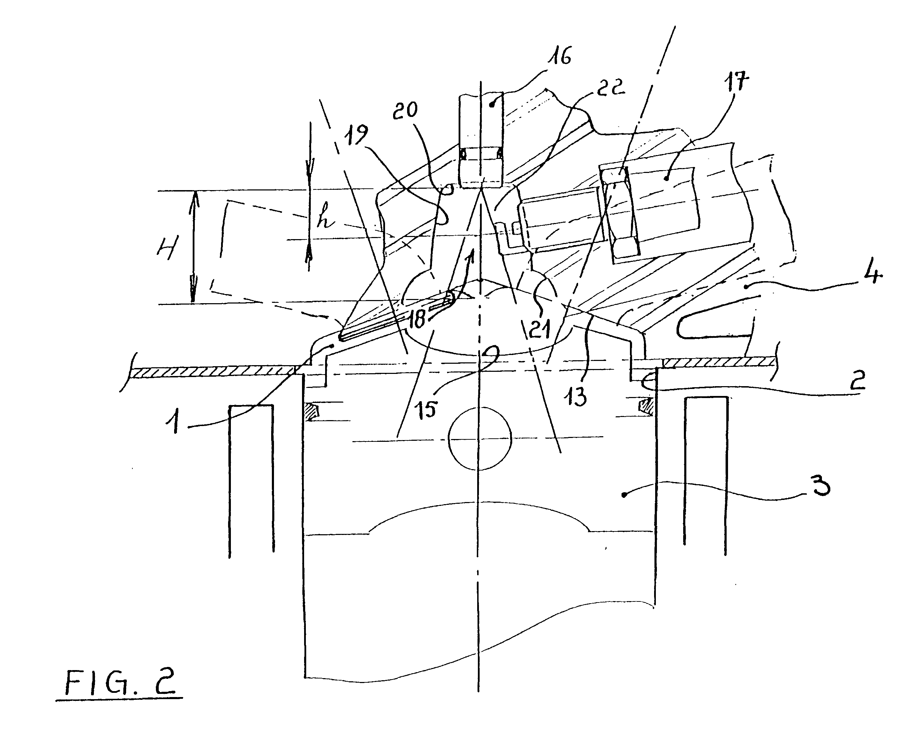

L'exemple de réalisation de l'invention décrit conformément aux figures 1 et 2, concerne un moteur à combustion interne du type multicylindre, à allumage commandé, à injection directe de carburant et à quatre soupapes par cylindre.

Le corps principal de ce moteur à combustion interne est principalement formé par une culasse 4 surmontant un bloc carter-cylindres 10. Une pluralité d'alésages cylindriques ou cylindres, identiques au cylindre 2 représenté, sont agencés dans le carter-cylindres 10. Chaque cylindre 2 loge un piston 3 dont le mouvement de va-et-vient est destiné à être converti en un mouvement rotatif par un système bielle-vilebrequin non représenté.

Dans la partie supérieure du cylindre 2 s'étend une chambre de combustion 1 qui est délimitée par la face supérieure du piston 3, la face inférieure 13 de la culasse 4 s'étendant au-dessus du piston 3 et les parois intérieures du cylindre 2. La paroi inférieure 13 de la culasse est principalement en forme de toit à deux pentes dont l'arête 14 s'étend sensiblement parallèlement à l'axe longitudinal de la culasse 4. L'angle formé par les deux pentes du toit 13 est par exemple compris entre 35° et 55°.

La culasse 4 est traversée transversalement pour chaque chambre de combustion 1, par deux conduits d'admission 5, 6 en air frais comburant et par deux conduits d'échappement 9 et 10 des gaz brûlés, s'étendant respectivement de part et d'autre de l'arête 14 entre une face latérale de la culasse 4 et la chambre de combustion 1. Ces conduits 5, 6, 9 et 10 débouchent respectivement dans la chambre de combustion 1 par des orifices d'admission 7 et 8 et d'échappement 11 et 12 qui sont munis de soupapes à tige permettant d'en contrôler l'ouverture.

Les deux orifices d'admission 7 et 8 débouchent donc dans la chambre de combustion 1, d'un même côté par rapport à l'arête 14, tandis que les orifices d'échappement 11 et 12 débouchent dans la chambre de combustion 1 du côté opposé aux orifices d'admission. L'angle formé entre les soupapes d'admission et d'échappement correspond à l'angle du toit 13 et est donc compris entre 35° et 55°. Par ailleurs, le calibrage des orifices d'admission est adapté pour occuper au maximum la face admission du toit 13, en limite d'effets de parois.

Les deux conduits d'admission 5 et 6 qui s'étendent sensiblement parallèlement l'un à l'autre à travers la culasse 4 sont de plus conformés pour favoriser le remplissage de la chambre de combustion 1 en air comburant.

La paroi inférieure 13 de la culasse 4 comporte par ailleurs un évidement 18 où débouche un injecteur de carburant 16 et une bougie d'allumage 17. L'injecteur 16 est connecté classiquement à un circuit d'alimentation en carburant sous pression non figurée. La quantité de carburant injectée est déterminée par un système électronique de contrôle moteur, également non figuré, qui détermine le phasage et la durée d'ouverture de l'injecteur 16 suivant les conditions de fonctionnement du moteur et notamment la charge et le régime. Ce même système électronique de contrôle moteur commande par ailleurs le phasage et la durée d'allumage de la bougie 17.

L'évidement 18 est formé par une cavité principale 22 s'étendant dans l'axe du cylindre 2. Cette cavité est délimitée dans sa partie supérieure par une paroi de fond 20 où débouche le nez de l'injecteur 16 et une paroi latérale 19 de forme sensiblement ogivale tronquée. L'ouverture inférieure de cette cavité est prolongée en direction des quatre pontets inter-soupapes par des cavités secondaires 21.

Ces cavités secondaires 21 ont pour principale fonction d'augmenter le volume de l'évidement 18, ou volume de confinement, sans augmenter la profondeur de la cavité principale 22. Ainsi, il est possible de disposer d'un volume de confinement de dimension appropriée sans affecter la compacité de la culasse et sans réduire la surface de chasse ce qui permet de conserver le niveau de turbulence global souhaité.

Bien évidemment, le nombre de ces cavités secondaires n'est pas limitatif, il est ainsi possible de n'avoir que trois cavités secondaires : une s'étendant en direction du pontet admission et les deux autres s'étendant de part et d'autre de la cavité principale 22, parallèlement à l'arête 14. De même, leurs formes et leurs dimensions sont adaptées en fonction de la place disponible et du volume de confinement souhaité.

Par ailleurs, les formes des différentes cavités secondaires 21 entourant la cavité principale 22 sont également liées à la forme de cette dernière. La cavité principale 22 peut être de section circulaire ou bien encore elliptique comme cela est figuré, le grand axe de l'ellipse pouvant être parallèle à l'arête 14 ou bien encore perpendiculaire à celle-ci. De même, l'évasement donné à la paroi latérale 19 peut être réduite au minimum permis par les techniques de moulage/d'usinage, de façon à atteindre une forme sensiblement cylindrique.

L'injecteur de carburant est monté à travers la culasse 4 parallèlement à l'axe du cylindre de façon à ce que son nez d'injection débouche dans la paroi de fond 20 de l'évidement 18. Les dimensions de l'évidement 18 et celles du cône d'éjection du carburant sont adaptées les unes aux autres pour éviter tout mouillage de la paroi latérale 19 directement par le jet de carburant, quelles que soient les conditions de fonctionnement du moteur.

La bougie 17 qui débouche latéralement à travers la paroi 19, s'étend dans la culasse 4 de préférence dans le plan axial de la culasse, soit au-dessus des conduits d'admission 5,6 comme cela est figuré soit encore au-dessus des conduits d'échappement 9,10. La bougie est inclinée par rapport à l'axe du cylindre d'un angle α, cet angle est de préférence supérieur à 45°. Le positionnement de la bougie 17 est par ailleurs adapté pour que le point d'allumage constitué par l'entrefer de ses électrodes, se trouve à une distance h adaptée du nez de l'injecteur 16 et soit atteint par le jet de carburant de la bougie lorsque le moteur fonctionne en mélange stratifié.

La profondeur H de l'évidement 18 est choisie de façon que la distance h précitée soit sensiblement inférieure au deux tiers de H (h<(2/3)*H). En particulier, la bougie 17 s'étend au-dessus des cavités secondaires 21. Cette implantation de la bougie 17 dans la partie supérieure de l'évidement 18 à proximité immédiate du nez de l'injecteur 16, permet de mieux contrôler l'initiation de la combustion.

En effet, à l'intérieur du volume de confinement que constitue l'évidement 18, les mouvements aérodynamiques demeurent limités en particulier dans la partie supérieure de l'évidement 18. Il est donc possible de contrôler précisément la stratification du mélange carburé autour de la bougie. De plus, pour les fonctionnements à fortes charges, il est possible d'obtenir une première phase de combustion limitée à l'évidement 18, de déroulement très rapide proche d'une transformation isochore puis, lorsque le front de flamme quitte l'évidement 18 pour atteindre le cylindre, une seconde phase de type transformation isobare. Un tel déroulement permet d'améliorer le rendement thermodynamique de la combustion pour une même température maximum de cycle.

Il est à noter que les cavités secondaires réparties à la périphérie de la cavité principale 22 présentent l'avantage supplémentaire de canaliser les gaz balayés par effet de chasse. Ces gaz sont ainsi dirigés à la sortie de la cavité principale 22 et permettent donc de favoriser la propagation rapide du front de flamme à l'ensemble de la chambre de combustion 1.

La face supérieure du piston 3 présente une forme générale en toit complémentaire à la surface en toit 13 de la culasse 4 de façon à générer un effet de chasse adaptée. L'intensité et la direction de cette chasse sont notamment déterminées par l'épaisseur de la lame d'air entre le piston et la culasse au Point Mort Haut.

La face supérieure du piston 3 peut présenter par ailleurs, au droit de l'impact du jet de carburant provenant de l'injecteur 16, une concavité 15. Cette concavité 15 est de préférence centrée dans l'axe du piston 3. Sa forme et son volume sont adaptés en fonction des performances souhaitées du moteur et notamment du taux de compression.

Bien entendu, l'invention n'est nullement limitée aux modes de réalisation décrits et illustrés qui n'ont été donnés qu'à titre d'exemples non limitatifs.

## Revendications

1. Moteur à combustion interne comprenant :
- une chambre de combustion (1) délimitée par la paroi supérieure d'un piston (3) monté dans un alésage cylindrique (2) d'un bloc-cylindres et la paroi inférieure d'une culasse (4) en forme de toit (13) dont l'arête (14) s'étend parallèlement à l'axe longitudinal du moteur ;
- deux conduits d'admission (5,6) formés à travers la culasse (4) et débouchant dans la chambre de combustion (1) d'un côté de la surface en toit (13) par deux orifices distincts d'admission (7,8) obturés par des soupapes ;
- deux conduits d'échappement (9,10) formés à travers la culasse (4) et débouchant dans la chambre de combustion (1) du côté opposé aux orifices d'admission par deux orifices distincts d'échappement (11,12) obturés par des soupapes ;
- un évidement (18) ménagé dans la culasse et débouchant dans la paroi inférieure de la culasse (4) en forme de toit (13) ;
- un injecteur de carburant (16) disposé parallèlement à l'axe du cylindre (2) et débouchant au sommet de l'évidement (18) ;
- une bougie d'allumage (17) débouchant dans l'évidement (18) ;
- l'évidement (18) étant formé par une cavité principale (22) délimitée par un fond (20) où débouche le nez de l'injecteur (16) et une paroi latérale (19), et une pluralité de cavités secondaires (21) débouchant dans la partie inférieure de la cavité principale (22).

2. Moteur à combustion interne selon la revendication 1, **caractérisé en ce que** ladite cavité principale (22) s'étend dans l'axe du cylindre (2).

3. Moteur à combustion interne selon l'une quelconque des revendications 1 à 2, **caractérisé en ce que** ladite cavité principale (22) est de section sensiblement circulaire.

4. Moteur à combustion interne selon l'une quelconque des revendications 1 à 2, **caractérisé en ce que** ladite cavité principale (22) est de section sensiblement elliptique.

5. Moteur à combustion interne selon l'une quelconque des revendications 1 à 4, **caractérisé en ce que** le piston (3) est pourvu sur sa paroi supérieure d'une cavité (15) s'étendant sensiblement sous ledit évidement (18).

6. Moteur à combustion interne selon l'une quelconque des revendications 1 à 5, **caractérisé en ce que** les cavités secondaires (21) s'étendent de part et d'autre de la cavité principale (22) parallèlement à l'arête (14) et entre les orifices d'admission (7,8) et/ou d'échappement (11,12).

7. Moteur à combustion interne selon l'une quelconque des revendications 1 à 6, **caractérisé en ce que** la bougie (17) débouche à travers ladite paroi latérale (19) dans la partie supérieure de la cavité principale (22).

8. Moteur à combustion interne selon la revendication 7, **caractérisé en ce que** les électrodes de la bougie (17) s'étendent au voisinage de l'axe du cylindre (2).

9. Moteur à combustion interne selon l'une quelconque des revendications 1 à 8, **caractérisé en ce que** la bougie (17) est disposée au-dessus des conduits d'admission (5,6) avec une inclinaison adaptée par rapport à l'axe du cylindre (2).

10. Moteur à combustion interne selon l'une quelconque des revendications 1 à 8, **caractérisé en ce que** la bougie (17) est disposée au-dessus des conduits d'échappement (9,10) avec une inclinaison adaptée par rapport à l'axe du cylindre (2).

## Patentansprüche

1. Verbrennungsmotor, mit:
- einer Verbrennungskammer (1), die begrenzt ist durch die obere Wand eines Kolbens (3), der in einer zylindrischen Bohrung (2) eines Zylinderblocks angeordnet ist und durch die untere Wand eines Zylinderkopfes (4) in Form eines Daches (13), dessen Kante (14) sich parallel zur Längsachse des Motors erstreckt;
- zwei Einlassleitungen (5,6), die den Zylinderkopf (4) durchsetzen und in der Verbrennungskammer (1) auf der einen Seite der Dachfläche (13) über zwei voneinander getrennte Einlassöffnungen (7,8) münden, die durch Ventile verschlossen sind;
- zwei Auslassleitungen (9,10), die den Zylinderkopf (4) durchsetzen und in der Verbrennungskammer (1) auf der den beiden Einlassöffnungen gegenüberliegenden Seite über zwei voneinander getrennte Auslassöffnungen (11,12) münden, die durch Ventile verschlossen sind;
- einer Aussparung (18), die im Zylinderkopf ausgebildet ist und in der unteren dachförmigen Wand (13) des Zylinderkopfes (4) mündet;
- einer Einspritzdüse (16) für den Kraftstoff, die parallel zur Achse des Zylinders (2) angeordnet ist und die im Oberteil der Aussparung (18) mündet;
- einer Zündkerze (17), die in der Aussparung (18) mündet;
- wobei die Aussparung (18) durch einen Haupthohlraum (22), der durch einen Boden (20), in dem die Spitze der Einspritzdüse (16) mündet und durch eine Seitenwand (19) begrenzt wird, sowie durch eine Vielzahl von Nebenhohlräumen (21), die im unteren Abschnitt des Haupthohlraumes (22) münden, gebildet wird.

2. Verbrennungsmotor nach Anspruch 1, **dadurch gekennzeichnet, dass** sich der Haupthohlraum (22) entlang der Achse des Zylinders (2) erstreckt.

3. Verbrennungsmotor nach einem der Ansprüche 1 bis 2, **dadurch gekennzeichnet, dass** der Haupthohlraum (22) einen im wesentlichen kreisförmigen Querschnitt aufweist.

4. Verbrennungsmotor nach einem der Ansprüche 1 bis 2, **dadurch gekennzeichnet, dass** der Haupthohlraum (22) einen im wesentlichen elliptischen Querschnitt aufweist.

5. Verbrennungsmotor nach einem der Ansprüche 1 bis 4, **dadurch gekennzeichnet, dass** der Kolben (3) auf seiner oberen Wand mit einer Aushöhlung (15) versehen ist, die im wesentlichen unterhalb der Aussparung (18) angeordnet ist.

6. Verbrennungsmotor nach einem der Ansprüche 1 bis 5, **dadurch gekennzeichnet, dass** sich die Nebenhohlräume (21) beidseits des Haupthohlraumes (22) parallel zur Kante (14) und zwischen den Einlassöffnungen (7,8) und/oder den Auslassöffnungen (11,12) erstrecken.

7. Verbrennungsmotor nach einem der Ansprüche 1 bis 6, **dadurch gekennzeichnet, dass** die Zündkerze (17) die Seitenwand (19) durchsetzt und im oberen Abschnitt des Haupthohlraumes (22) mündet

8. Verbrennungsmotor nach Anspruch 7, **dadurch gekennzeichnet, dass** sich die Elektroden der Zündkerze (17) bis in die Nähe der Achse des Zylinders (2) erstrecken.

9. Verbrennungsmotor nach einem der Ansprüche 1 bis 8, **dadurch gekennzeichnet, dass** die Zündkerze (17) oberhalb der Einlassleitungen (5,6) mit einer geeigneten Neigung bezüglich der Achse des Zylinders (2) angeordnet ist.

10. Verbrennungsmotor nach einem der Ansprüche 1 bis 8, **dadurch gekennzeichnet, dass** die Zündkerze (17) oberhalb der Auslassleitungen (9,10) mit einer geeigneten Neigung bezüglich der Achse des Zylinders (2) angeordnet ist.

## Claims

1. Internal combustion engine comprising:
- a combustion chamber (1) delimited by the upper wall of a piston (3) mounted in a cylindrical bore (2) of a cylinder block and the lower wall of a cylinder head (4) in the shape of a roof (13) the edge (14) of which extends parallel to the longitudinal axis of the engine;
- two inlet manifolds (5, 6) formed across the cylinder head (4) and emerging into the combustion chamber (1) from one side of the roof-shaped surface (13) via two distinct inlet ports (7, 8) sealed by valves;
- two exhaust manifolds (9, 10) formed across the cylinder head (4) and emerging into the combustion chamber (1) from the side opposite the inlet manifolds, via to distinct exhaust ports (11 , 12) sealed by valves;
- a hollow (18) fabricated in the cylinder head and emerging into the lower wall of the cylinder head (4) in the shape of a roof (13);
- a fuel injector (16) arranged parallel to the axis of the cylinder (2) and emerging at the summit of the hollow (18);
- a spark plug (17) emerging into the hollow (18);
- the hollow (18) being formed by a main cavity (22) delimited by a base (20) where the head of the injector (16) emerges, and a lateral wall (19), and a plurality of secondary cavities (21) opening out into the lower part of the main cavity (22).

2. Internal combustion engine according to claim 1, **characterised in that** said main cavity (22) extends in the axis of the cylinder (2).

3. Intemal combustion engine according any one of claims 1 to 2, **characterised in that** said main cavity (22) has a substantially circular cross-section.

4. Internal combustion engine according to any one of claims 1 to 2, **characterised in that** said main cavity (22) has a substantially elliptical cross-section.

5. Internal combustion engine according to any one of claims 1 to 4, **characterised in that** the piston (3) is provided on its upper wall with a cavity (15) extending substantially beneath said hollow (18).

6. Internal combustion engine according to any one of claims 1 to 5, **characterised in that** the secondary cavities (21) extend on either side of the main cavity (22) parallel to the edge (14) and between the inlet ports (7, 8) and/or exhaust ports (11, 12).

7. Internal combustion engine according to any one of claims 1 to 6, **characterised in that** the spark plug (170 emerges across said lateral wall (19) in the upper part of the main cavity (22).

8. Internal combustion engine according to claim 7, **characterised in that** the electrodes (17) of the spark plug are in the vicinity of the axis of the cylinder (2).

9. Internal combustion engine according to any one of claims 1 to 8, **characterised in that** the spark plug (17) is arranged above the inlet manifolds (5, 6) at a suitable degree of inclination with respect to the axis of the cylinder (2).

10. Internal combustion engine according to any one of claims 1 to 8, **characterised in that** the spark plug (17) is arranged above the exhaust manifolds (9, 10) at a suitable degree of inclination with respect to the axis of the cylinder (2).
